# EUROPÄISCHE PATENTANMELDUNG

(11) **EP 2 423 238 A1**
(43) Veröffentlichungstag der Anmeldung: **29.02.2012**
(21) Anmeldenummer: 10174665.9
(22) Anmeldetag: 31.08.2010
(51) Int. Cl.: C08F 236/12, C08F 2/06, C08F 4/04, C08C 19/02

(54) **Verfahren zur Herstellung von Nitrilkautschuken in organischen Lösungsmitteln**

(71) Anmelder: LANXESS Deutschland GmbH, 51369 Leverkusen (DE); Karlsruher Institut für Technologie, 76131 Karlsruhe (DE)
(72) Erfinder: Klimpel, Michael, Dr., 40764 Langenfeld (DE); Brandau, Sven, Dr., 67000 Strasbourg (FR); Westeppe, Uwe, Dr., 67610 La Wantzenau (FR); Barner-Kowollik, Christopher, Prof. Dr., 76297 Stutensee-Blankenloch (DE); Kaiser, Andreas, Dr., 67000 Strasbourg (FR)

(57) **Zusammenfassung**

Bereitgestellt wird ein neues Verfahren zur Herstellung von Nitrilkautschuken durch radikalische Polymerisation in Gegenwart eines Initiators in mindestens einem organischen Lösungsmittel. An diese Polymerisation kann sich eine Hydrierung zu hydrierten Nitrilkautschuken anschließen, vorteilhafterweise erfolgt die Hydrierung in dem gleichen organischen Lösungsmittel. Die erhaltenen optional hydrierten Nitrilkautschuke zeichnen sich dadurch aus, dass sie weder Endgruppen noch sonstige strukturelle Elemente in der Polymerhauptkette aufweisen, die Fragmente von Molekulargewichtsreglern darstellen. Sie können mit einer breiten Vielfalt von Molekulargewichten hergestellt werden

## Beschreibung

Die vorliegende Erfindung betrifft ein Verfahren zur Herstellung von Nitrilkautschuken durch radikalische Polymerisation in Lösung sowie Nitrilkautschuke, die weder in der Polymerhauptkette noch an den Kettenenden auf Molekulargewichtsregler-Verbindungen zurückgehende Strukturelemente aufweisen, ferner ein Verfahren zur Hydrierung dieser Nitrilkautschuke und die entsprechenden hydrierten Nitrilkautschuke.

Unter Nitrilkautschuken, abgekürzt auch als "NBR" bezeichnet, werden Kautschuke verstanden, bei denen es sich um Co- oder Terpolymere aus mindestens einem a,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstech-nische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Vernetzung entwickelt. Derartige Vernetzungskonzepte beziehen auch Polymere mit ein, die aufgrund funktioneller Gruppen nicht allen Vernetzungsformen und -agentien zugänglich sind und daher eine besondere Herausforderung darstellen.

Großtechnisch werden Nitrilkautschuke fast ausschließlich durch sogenannte Emulsionspolymerisation hergestellt. Zur Regelung des Molekulargewichts und damit auch der Viskosität des entstehenden Nitrilkautschuks werden dabei üblicherweise Dodecylmercaptane, insbesondere Tertiärdodecylmercaptane ("TDDM" oder auch "TDM" abgekürzt) eingesetzt. Nach der Polymerisation wird der erhaltene NBR-Latex in einem ersten Schritt koaguliert und daraus der NBR-Feststoff isoliert. Sofern eine weiterführende Hydrierung des Nitrilkautschuks zum HNBR gewünscht ist, erfolgt diese Hydrierung ebenfalls nach bekannten Methoden des Standes der Technik, beispielsweise unter Einsatz homogener oder auch heterogener Hydrierkatalysatoren. Die Katalysatoren basieren üblicherweise auf Rhodium, Ruthenium oder Titan. Es können aber auch Platin, Iridium, Palladium, Rhenium, Ruthenium, Osmium, Kobalt oder Kupfer entweder als Metall oder aber bevorzugt in Form von Metallverbindungen eingesetzt werden.

In großtechnischem Maßstab werden derartige Hydrierreaktionen von NBR zum HNBR üblicher Weise in homogener Phase, d.h. in einem organischen Lösungsmittel durchgeführt. Geeignete Katalysatoren und Lösungsmittel hierfür sind beispielsweise aus DE-A 25 39132 und EP-A 0 471250 bekannt. Insbesondere der sogenannte Wilkinson-Katalysator hat sich für eine selektive Hydrierung der Nitrilkautschuke in Monochlorbenzol als organischem Lösungsmittel bewährt. Um diese Hydrierung in einem organischem Medium durchzuführen, muss somit der nach der Polymerisation in wässriger Emulsion erhaltene Nitrilkautschuk zunächst isoliert werden. Dies ist verfahrens-technisch und apparativ aufwändig und damit auch wirtschaftlich nicht uneingeschränkt attraktiv.

Hinzukommt, dass im Verlauf der Hydrierung von Nitrilkautschuken ein ganz erheblicher Anstieg der Viskosität (üblicherweise um einen Faktor von 2 oder mehr) zu beobachten ist (der sogenannte Mooney-Sprung, in der Fachliteratur oft auch als Mooney Increase Ratio ("MIR") bezeichnet). Aus diesem Grund müssen Nitrilkautschuke unter Umständen vor der Hydrierung in einem weiteren Schritt einem Molekulargewichtsabbau (z.B. durch Metathese) unterzogen werden, um letztendlich einen hydrierten Nitrilkautschuk mit nicht zu hohem Molekulargewicht, respektive nicht zu hoher Viskosität erhalten zu können. Auf den bisher bekannten und großtechnisch umsetzbaren Synthesewegen sind auch den Möglichkeiten zur Beeinflussung der Polydispersität in gewissem Maß Grenzen gesetzt.

Es gab daher bereits verschiedenste Ansätze zur Optimierung der Herstellungsverfahren von NBR sowie HNBR. So wurde versucht, die Polymerisation zum Nitrilkautschuk in organischer Lösung durchzuführen. Diese Arbeiten waren jedoch bisher wenig Erfolg versprechend, und eine tatsächliche technische Umsetzung derartiger Verfahren ist bisher weder aus der Literatur noch aus der Praxis bekannt. In der Zusammenfassung der **Dissertation von C. Hollbeck,** Universität-Gesamthochschule Essen, 1995, Seite II, wird für die Copolymerisation von Acrylnitril und 1,3-Butadien in organischer Lösung folgendes festgestellt (Zitat): "Mit einem Zahlenmittel des Polymerisationsgrades Pn von 1589 (Molekulargewicht (Mn)= ~85.800 g/mol) und einem Umsatz von 40,5% konnten die gesteckten Ziele bei einer Reaktionstemperatur von 343 K in 40 Stunden realisiert werden. Eine Zeitverkürzung auf 18 Stunden ließ sich nur unter Reduzierung des geforderten Umsatzes erreichen. Wie Testversuche zeigten, ist unter den gegebenen Bedingungen auch bei einer Erhöhung der Temperatur auf 353 K eine Kombination von Pn ≥ 1400 und Umsatz größer als 40% nicht im Bereich des Möglichen". Eine Beschränkung des erreichbaren Umsatzes auf gut 40 % innerhalb einer Reaktionszeit von 40 Stunden machen das dort beschriebene Verfahren der organischen Lösungspolymerisation für die Praxis technisch und wirtschaftlich untauglich.

Bekannt ist es bereits, reines Polyacrylnitril (PAN) in Lösung unter Einsatz der sogenannten RAFT Technologie herzustellen. Aus Macromolecules 2003, 36, 8537 sind erste Versuche bekannt, bei denen Polyacrylnitril mit nur geringen Molmassen von bis zu 16.000 gm/mol und engen Molekulargewichtsverteilungen nahe 1,1 erhalten wurde. In weiteren Arbeiten gelang es, Polyacrylnitril durch RAFT Polymerisation mit vernünftigen Ergebnissen herzustellen (European Polymer Journal (2008), 44(4), 1200-1208 (Xiao-hui Liu, Gui-bao Zhang, Bai-xiang Li, Yun-gang Bai, Ding Pan und Yue-sheng Li)). Erhalten wurde dabei Polyacrylnitril mit hohem Molekulargewicht (Mn >200.000 g/mol) und einem geringen Polydispersitätsindex (PDI ~ 1,7) in Lösung unter Einsatz von Bis(thiobenzoyl)disulfid oder Bis(thiophenylacetoyl)disulfid, als Vorstufen für die in-situ erzeugten Regler 2-Cyanoprop-2-yldithiobenzoat und 2-Cyanoprop-2-yl-dithiophenylacetat. Die Verwendung von Dibenzyltrithiocarbonaten als RAFT-Regler für die Homopolymerisation von Acrylnitril (Journal of Polymer Science, Part A: Polymer Chemistry (2005), 44(1), 490-498) führt dagegen nur zu Polymeren mit geringen Molekularmassen (Mn) von < 30.000 g/mol, selbst wenn die Polydispersitäten zwischen 1,02 und 2,35 liegen. Aus Macromolecular Chemistry and Physics (2002), 203(3), 522-537 ist es ferner bekannt, dass die Homopolymerisation von 1,3-Butadien durch RAFT-Technologie nur Polymere mit geringen Molekulargewichten liefert: Die erzielten Molekulargewichte (Mn) liegen noch niedriger als bei der o.g. Herstellung von Polyacrylnitril mit Dibenzyltrithiocarbonaten als RAFT-Regler und betragen maximal 10.500 g/mol bei einer gleichzeitig hohen Polydispersität von 3,40. Es können hier zwar auch deutlich niedrigere Polydispersitäten von bis zu 1,24 erhalten werden, dies jedoch nur unter substanzieller Einbuße beim Molekulargewicht (Mn) auf nur noch 1.300 g/mol.

Sowohl der Einsatz der bereits seit langem bekannten tertiären C₁₂-C₁₆ Mercaptane, insbesondere TDM in der Emulsionspolymerisation, als auch der Einsatz der oben genannten RAFT Agenzien als Molekulargewichtsregler bedeutet, dass dem System eine schwefelhaltige Komponente zugesetzt wird, deren Anwesenheit nicht in Belangen positiv zu sehen ist. Bei Einsatz anderer Regler- Substanzen werden dem Reaktionssystem ebenfalls nicht uneingeschränkt zu empfehlende halogen-haltige Regler zugesetzt wie z.B. Tetrachlorkohlenstoff. Insbesondere ist nicht auszuschließen, dass die Endgruppen oder aber die Strukturelemente in der Polymerhauptkette des Nitrilkautschuks, die auf die jeweils eingesetzten Molekulargewichtsregler zurückgehen, Einfluss auf etwaige, sich an die Polymerisation anschließende Folgeumsetzungen, wie z.B. eine Hydrierung, haben und vor allem die Aktivität dabei eingesetzter Katalysatoren beeinträchtigen. Es ist ferner nicht ausgeschlossen, dass im Nitrilkautschuk gegebenenfalls verbleibende geringe Mengen nicht umgesetzter Molekulargewichts-regler oder aber deren Abbauprodukte die weitere Verarbeitung des Nitrilkautschuks zu vulkanisierbaren Mischungen, die Vulkanisation oder andere Folgeumsetzungen beeinflussen.

Vor dem oben geschilderten Hintergrund bestand die **Aufgabe der vorliegenden Erfindung** somit darin, ein Verfahren bereitzustellen, durch das in möglichst einfacher Form Nitrilkautschuke mit einer breiten Palette von Molekulargewichten und Polydispersitäten und im nächsten Schritt auch die entsprechenden hydrierten Nitrilkautschuke hergestellt werden können.

**Überraschenderweise** wurde diese Aufgabe gelöst durch ein Verfahren zur Herstellung von Nitrilkautschuken mittels radikalischer Polymerisation in organischer Lösung ohne jeglichen Einsatz von Molekulargewichtsreglern. Hieran kann sich optional eine Hydrierreaktion anschließen.

Im Sinne dieser Anmeldung ist der Begriff "Nitrilkautschuk(e)" breit zu interpretieren und umfasst sowohl die Nitrilkautschuke als auch hydrierte Nitrilkautschuke. Sofern es sich um hydrierte Nitrilkautschuke handelt, bedeutet die oben genannte Formulierung "Nitrilkautschuke enthaltend Wiederholungseinheiten abgeleitet von" somit, dass es sich bei den Wiederholungseinheiten, die auf das konjugierte Dien zurückgehen, um solche handelt, in denen die nach der Polymerisation im Polymer zunächst vorhandenen C=C Doppelbindungen ganz oder teilweise hydriert sind.

Soweit in dieser Anmeldung der Begriff "substituiert" verwendet wird, so bedeutet dies, dass ein Wasserstoff-Atom an einem angegebenen Rest oder Atom durch eine der angegebenen Gruppen ersetzt ist, mit der Maßgabe, dass die Wertigkeit des angegebenen Atoms nicht überschritten wird und immer nur unter der Bedingung, dass diese Substitution zu einer stabilen Verbindung führt.

**Gegenstand der Erfindung** ist ein **Verfahren zur Herstellung von Nitrilkautschuken** durch radikalische Polymerisation mindestens eines konjugierten Diens, mindestens eines a,β-ungesättigten Nitrils und gegebenenfalls eines oder mehrerer weiterer copolymerisierbarer Monomere unter Einsatz eines Initiators in mindestens einem organischen Lösungsmittel, dadurch gekennzeichnet, dass die Polymerisation in Abwesenheit jeglicher Substanzen erfolgt, die während der Polymerisation als Molekulargewichtsregler fungieren.

In einer Ausführungsform des erfindungsgemäßen Verfahrens schließt sich an die radikalische Polymerisation eine Hydrierung des Nitrilkautschuks an.

### Detaillierte Beschreibung:

Dass eine radikalische Polymerisation zum Nitrilkautschuk in organischer Lösung überhaupt möglich ist und noch dazu ohne jeglichen Einsatz von Molekulargewichtsreglern, war für einen Fachmann völlig unerwartet, da alle bisherigen Untersuchungen zur Lösungspolymerisation von NBR nicht zu vernünftigen Erfolgen geführt haben. Überraschenderweise gelingt es trotz Abwesenheit von Molekulargewichtsreglern, Nitrilkautschuke mit für technische Anwendungen einsetzbaren und interessanten Molekulargewichten herzustellen, die gleichzeitig keinerlei Fragmente von Molekulargewichtsreglern aufweisen, d.h. weder Endgruppen noch in die Polymerkette eingebaute Strukturelemente, die aufgrund des Kettenübertragungsmechanismus ansonsten vorzufinden sind, wenn die typischerweise aus dem Stand der Technik bekannten Molekulargewichtsregler eingesetzt werden. Ferner weisen die Nitrilkautschuke auch keinerlei Restmengen nicht umgesetzter Molekulargewichtsregler oder aber von deren möglichen Abbauprodukten auf. Darüberhinaus zeichnen sich die Nitrilkautschuke durch völlige Emulgator- und Salzfreiheit aus.

Mit dem erfindungsgemäßen Verfahren gelingt es, in Zeiträumen, die denen der herkömmlichen Emulsionspolymerisation zur NBR-Herstellung vergleichbar sind, zu Umsätzen zu gelangen, die das Verfahren für eine großtechnische Umsetzung geeignet machen. So lässt sich bei einer Polymerisationszeit von 10 Stunden bereits ein Umsatz von bis zu 50% erzielen bei gleichzeitiger Erzeugung technisch akzeptabler Molekulargewichte (Mn von mindestens 50.000 g/mol).

Das erfmdungsgemäße Verfahren zeichnet sich insbesondere dadurch aus, dass die Polymerisation in organischer Lösung in Abwesenheit jeglicher Molekulargewichtsregler erfolgreich gelingt.

Als Molekulargewichtsregler oder auch Polymerisationsregler werden allgemein Verbindungen bezeichnet, die im Polymerisationsverlauf Kettenübertragungsreaktionen beschleunigen und damit eine Herabsetzung des Polymerisationsgrades der resultierenden Polymeren bewirken. Eine zusammenfassende Auflistung von Molekulargewichtsreglern findet sich in K. C. Berger und G. Brandrup in J. Brandrup, E. H. Immergut, Polymer Handbook, 3. Aufl., John Wiley & Sons, New York, 1989, S. 11/81 - 11/141.

Das erfmdungsgemäße Verfahren zeichnet sich insbesondere dadurch aus, dass die Durchführung in Abwesenheit von Molekulargewichtsreglern der nachfolgenden Aufzählung (i) - (x) erfolgt
(i) Mercaptanen, die mindestens eine SH-Gruppe enthalten,
(ii) Mercaptoalkohole, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfide, Polysulfide,
(vi) Thioharnstoff,
(vii) Allylverbindungen,
(viii) Aldehyde,
(ix) aliphatische Halogenkohlenwasserstoffen, araliphatische Halogenkohlenwasserstoffen und
(x) Saccharin.

Die Durchführung des erfindungsgemäßen Verfahrens erfolgt somit insbesondere in Abwesenheit von
(i) Alkylmercaptanen, bevorzugt C₁-C₁₆ Alkylmercaptanen, insbesondere Methylmercaptan, Ethylmercaptan, n-Butylmercaptan, n-Hexylmercaptan, n-Octylmercaptan, n-Dodecylmercaptan und tert.-Dodecyl-mercaptanen,
(ii) aliphatischen Mercapatoalkoholen und cycloaliphatischen Mercaptoalkoholen, bevorzugt 2-Mercapto-1-ethanol, 3-Mercapto-1-propanol, 3-Mercaptopropan-1,2-diol, 4-Mercapto-1-butanol und 2-Mercaptocyclohexanol,
(iii) Mercaptoessigsäure, 3-Mercaptopropionsäure, Mercaptobutandisäure, Cystein, N-Acetylcystein und Alkylthioglycolate, insbesondere Ethylhexylthioglycolat,
(iv) Thioessigsäure,
(v) Xanthogendisulfide, bevorzugt Diisopropylxanthogendisulfid,
(vi) Thioharnstoff
(vii) Allylalkohol, Allylchlorid,
(viii) Crotonaldehyd,
(ix) Chloroform, Tetrachlorkohlenstoff, Iodoform, Benzylbromid und
(x) Saccharin

Ferner bedeutet dies, dass das erfindungsgemäße Verfahren in Abwesenheit des aus der EP-A-2 162 430 bekannten und speziellen Gemischs isomerer tert.Dodecylmercaptane erfolgt, d.h. einem Gemisch aus 2,2,4,6,6-Pentamethylheptanthiol-4 , 2 , 4 , 4 , 6 , 6-Pentamethylheptanthiol-2, 2,3,4,6,6-Pentamethylheptanthiol-2 und 2,3,4,6,6-Pentamethylheptanthiol-3.

Weiterhin bedeutet dies, dass die Durchführung des erfindungsgemäßen Verfahrens in Abwesenheit von Molekulargewichtsreglern erfolgt, bei denen es sich um **Verbindungen der allgemeinen Strukturformel (VI)** handelt, 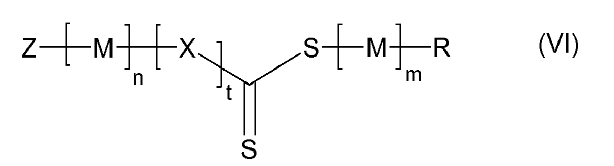 worin
- **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
- **R**: (a) für den Fall, dass m≠ 0 ist, die gleichen Bedeutungen besitzen kann wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
- **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
- **n und m**: gleich oder verschieden sind und jeweils im Bereich von 0 bis 10.000 liegen,
- **t**: 0 oder 1 ist, sofern n= 0, und gleich 1 ist, sofern n ≠ 0, und
- **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt.

Insbesondere werden im erfindungsgemäßen Verfahren keine Molekulargewichtsregler der allgemeinen Formel (VI) eingesetzt, bei denen
- Z und R: die zuvor für die allgemeine Formel (VI) genannten Bedeutungen besitzen und
- n, m und t: alle gleich Null sind und
die somit die **allgemeine Struktur (VIa)** besitzen, 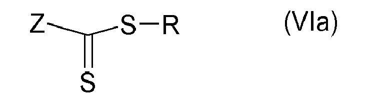 worin die Reste Z und R alle zuvor für die allgemeine Formel (VI) genannten Bedeutungen besitzen.

Weiterhin werden im erfindungsgemäßen Verfahren insbesondere keine **symmetrischen oder asymmetrischen Trithiocarbonate** als Molekulargewichtsregler eingesetzt, die ebenfalls unter die allgemeine Formel (VI) fallen und die **allgemeine Formel (VIb)** besitzen, 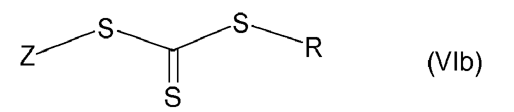 worin
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Bezüglich der für die allgemeine Formel (VIb) und nachfolgend für die allgemeinen Formeln (VIc), (VId) und (VIe) verwendeten Formulierungen, "dass R nach homolytischer Spaltung der R-S-Bindung ein **sekundäres oder tertiäres Radikal** bildet", gelten die nachfolgenden Definitionen. Diese gelten ebenfalls in analoger Form für die entsprechenden Formulierung "dass Z nach homolytischer Spaltung der Z-S-Bindung ein **sekundäres oder tertiäres Radikal bildet",** soweit diese im Rahmen der Anmeldung im Zusammenhang mit Z verwendet wird.

Das Atom im Rest R, welches die Bindung an S in der allgemeinen Formel (VIb) bewirkt (bzw. den noch folgenden allgemeinen Formeln (VIc), (VId) und (VIe)), führt bei homolytischer Spaltung der R-S Bindung dann zu einem als "tertiär" zu bezeichnenden Radikal, wenn an dieses Atom (die Bindung zum Schwefel ausgenommen) mindestens
(i) über Einfachbindungen drei Substituenten oder
(ii) über eine Einfachbindung ein Substituent und über eine Doppelbindung ein weiterer Substituent gebunden sind oder
(iii) über eine Dreifachbindung ein Substituent gebunden ist,
   wobei alle vorgenannten Substituenten ungleich Wasserstoff sein müssen.

Das Atom im Rest R, welches die Bindung an S in den allgemeinen Formeln (VIb), (VIc), (VId) und (VIe) bewirkt, führt bei homolytischer Spaltung der R-S Bindung dann zu einem als "sekundär" zu bezeichnenden Radikal, wenn an dieses Atom
(i) über Einfachbindungen zwei Substituenten gebunden sind oder
(ii) über eine Doppelbindung ein Substituent gebunden ist,
wobei alle vorgenannten Substituenten ungleich Wasserstoff sein müssen und alle weiteren möglichen Substituenten H sind.

Beispiele für Reste R bzw. Z, die bei homolytischer Spaltung der R-S (bzw. Z-S) Bindung zu einem als "tertiär" zu bezeichnenden Radikal führen, sind z.B. tert. Butyl, Cyclohexan-1-nitril-1-yl und 2-Methylpropannitril-2-yl.

Beispiele für Reste R bzw. Z, die bei homolytischer Spaltung der R-S (bzw. Z-S) Bindung zu einem als "sekundär" zu bezeichnenden Radikal führen, sind z.B. sek-Butyl, iso-Propyl und Cycloalkyl, bevorzugt Cyclohexyl.

Bezüglich der nachfolgend für die Formel (VId) verwendeten Maßgabe, "dass Z nach homolytischer Spaltung der Z-S-Bindung ein **primäres Radikal** bildet", gilt folgende Definition: Das Atom im Rest Z, welches die Bindung an S in der allgemeinen Formel (VId) bewirkt, führt bei homolytischer Spaltung der Z-S Bindung dann zu einem als "primär" zu bezeichnenden Radikal, wenn an dieses Atom über eine Einfachbindung kein oder maximal ein Substituent gebunden ist, der nicht Wasserstoff ist. Für Z = H gilt die og. Maßgabe per Definition als erfüllt.

Beispiele für Reste Z, die bei homolytischer Spaltung der Z-S Bindung zu einem als "primär" zu bezeichnenden Radikal führen, sind somit z.B. H, geradkettige C₁-C₂₀ Alkylreste, OH, SH, SR und C₂-C₂₀ Alkylreste mit Verzweigungen jenseits des C-Atoms, das die Bindung an S bewirkt.

Weiterhin wird das erfindungsgemäße Verfahren insbesondere in Abwesenheit von Molekulargewichtsreglern durchgeführt, bei denen es sich um Dithioester handelt, die somit unter die allgemeine Formel (VI) fallen und dabei die **allgemeine Formel (VIc)** besitzen, 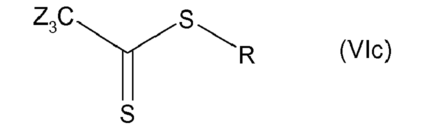
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Weiterhin werden im erfindungsgemäßen Verfahren insbesondere keine Molekulargewichtsregler eingesetzt, bei denen es sich um asymmetrische Trithiocarbonate handelt, die somit unter die allgemeine Formel (VI) fallen und die **allgemeine Formel (VId)** besitzen, 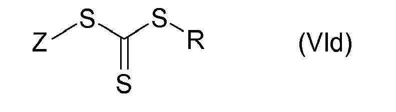 worin
- Z: die zuvor für die allgemeine Formel (VI) genannten Bedeutungen besitzt, allerdings mit der Einschränkung, dass Z nach homolytischer Spaltung der S-Z Bindung ein **primäres Radikal** ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen.

Weiterhin wird das erfindungsgemäße Verfahren insbesondere in Abwesenheit von Molekulargewichtsreglern durchgeführt, bei denen es sich um Dithioester handelt, die somit unter die allgemeine Formel (VI) fallen und die **allgemeine Formel (VIe)** besitzen, 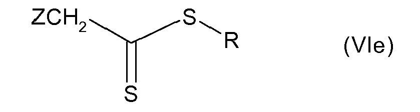 worin
- Z: alle für die allgemeine Formel (VI) gennanten Bedeutungen besitzen kann und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Zur Klarstellung sei angeführt, dass das erfindungsgemäße Verfahren insbesondere in Abwesenheit von Molekulargewichtsreglern durchgeführt wird, die ausgewählt sind aus der Gruppe bestehend aus Dodecylpropansäuretrithiocarbonat (DoPAT), Dibenzoyltrithiocarbonat (DiBenT), Cumyl-phenyldithioacetat (CPDA), Cumyldithiobenzoat, Phenylethyldithiobenzoat, Cyanoisopropyldithiobenzoat, 2-Cyanoethyldithiobenzoat, 2-Cyanoprop-2-yl-dithiophenylacetat, 2-Cyanoprop-2-yl-dithiobenzoat, S-Thiobenzoyl-1H,1H, 2-Keto-3-oxa-4H,4H,5H,5H-perfluoroundecanthiol und S-Thiobenzoyl-1-phenyl-2-keto-3-oxa-4H,4H, 5H, 5H-perfluoro-undecanthiol.

### INITIATOREN:

Bei dem erfindungsgemäßen Verfahren handelt es sich um eine radikalische Polymerisation unter Einsatz mindestens eines Initiators.

Üblicher Weise wird der Initiator in einer Menge im Bereich von 10⁻⁴ bis 10⁻¹ mol/l, bevorzugt in einer Menge von 10⁻³ bis 10⁻² mol/l eingesetzt. Durch Abstimmung des Verhältnisses der eingesetzten Initiatormenge zur Menge des verwendeten Molekulargewichtsreglers gelingt es, sowohl die Reaktionskinetik als auch die Molekularstruktur (Molekulargewicht, Polydispersität) gezielt zu beeinflussen.

Als Initiatoren werden üblicher Weise peroxidische Initiatoren oder Azo-Initiatoren eingesetzt. Bevorzugt werden peroxidische Initiatoren oder Azo-Initiatoren eingesetzt, die eine verlängerte Zerfallszeit aufweisen. Es hat sich bewährt, peroxidische Initiatoren oder Azo-Initiatoren einzusetzen, die bei einer Temperatur im Bereich von 70°C bis 200 °C, bevorzugt 80°C bis 175°C, besonders bevorzugt 85°C bis 160°C und insbesondere 85°C bis 150°C, in dem für die Polymerisation gewählten organischen Lösungsmittel eine Halbwertszeit von 10 Stunden oder mehr als 10 Stunden aufweisen.

Der Begriff der Halbwertszeit ist dem Fachmann im Zusammenhang mit Initiatoren geläufig. Nur als Beispiel: Eine Halbwertszeit von 10 Stunden in einem Lösungsmittel bei einer bestimmten Temperatur bedeutet konkret, dass sich unter diesen Bedingungen nach 10 Stunden die Hälfte des Initiators zersetzt hat.

Besonders bevorzugt werden Azoinitatoren der folgenden Strukturformeln (Ini-1)-(Ini-6) eingesetzt:

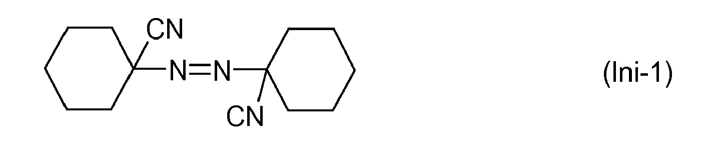

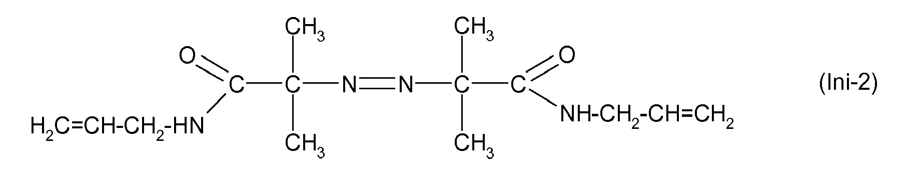

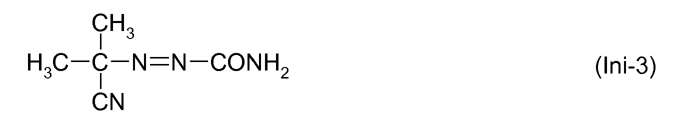

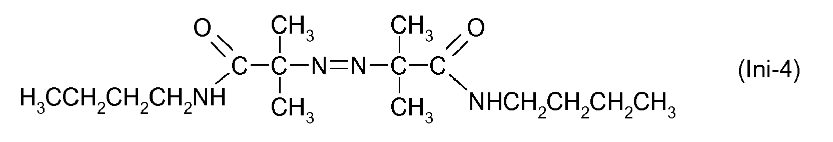

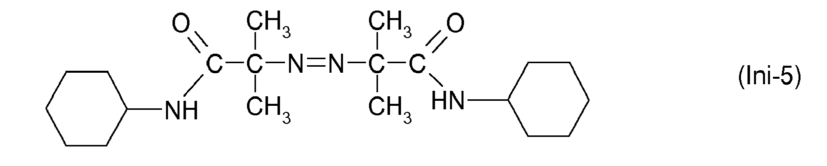

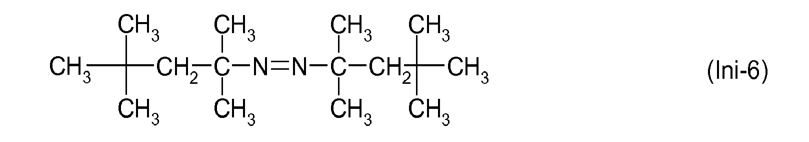

Bei den durch die Strukturformeln (Ini-1)-(Ini-6) dargestellten Initiatoren handelt es sich um 1,1'-Azobis(cyclohexan-1-carbonitril) (Ini-1), 2,2'-Azobis[N-(2-propenyl)-2-methylpropionamid] (Ini-2), 1-[(1-Cyano-1-methylethyl)azo]formamid (Ini-3), 2,2'-Azobis(N-butyl-2-methylpropionamid) (Ini-4), 2,2'-Azobis-(N-cyclohexyl-2-methylpropionamid) (Ini-5) und 2,2'-Azobis(2,4,4-trimethylpentan) (Ini-6).

Ganz besonders bevorzugt ist der Einsatz der Initiatoren der Formel (Ini-2) und (Ini-3). Die vorgenannten Azoinitiatoren der Strukturformeln (Ini-1)-(Ini-6) sind käuflich erhältlich, beispielsweise von Wako Pure Chemical Industries, Ltd..

Der Einsatz der vorgenannten speziellen Azoinitiatoren (Ini-1)-(Ini-6) hat sich besonders dann bewährt, wenn Nitrilkautschuke mit vergleichsweise höheren mittleren Molekulargewichten Mw (Gewichtsmittel des Molekulargewichts) und Mn (Zahlenmittel des Molekulargewichts) synthetisiert werden sollen.

Als **peroxidische Initiatoren** haben sich die folgenden Peroxo-Verbindungen, die eine -O-O-Einheit aufweisen, besonders bewährt, wenn sie die oben genannte Definition bezüglich der Halbwertszeit im gewählten organischen Lösungsmittel erfüllen: Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4-Dichlorbenzoylperoxid, 2,5-Dimethylhexan-2,5-dit.butylperoxid, B i s-(t-butylperoxyisopropyl) benzol, t-Butylcumylperoxid, D i-t-butylperoxid, Dicumylperoxid, t-Butylperbenzoat, t-Butylperacetat, 2,5-Dimethylhexan-2,5-diperbenzoat, t-Butylper-3,5,5-trimethylhexanoat. Bevorzugt wird p-Menthanhydroperoxid, Cumolhydroperoxid oder Pinanhydroperoxid eingesetzt.

### LÖSUNGSMITTEL:

Das erfindungsgemäße Verfahren wird in mindestens einem organischen Lösungsmittel durchgeführt. Große Mengen Wasser, wie im Fall der Emulsionspolymerisation sind somit nicht im Reaktionssystem vorhanden. Geringere Mengen Wasser von bis zu 5 Gew.%, bevorzugt bis 1 Gew.% (bezogen auf die Menge des organischen Lösungsmittels) können durchaus im Reaktionssystem zugegen sein. Entscheidend ist, dass die Mengen anwesenden Wassers so gering gehalten werden muss, dass es nicht zu einer Ausfällung des sich bildenden NBR-Polymers kommt. Es sei an dieser Stelle klar gestellt, dass es sich bei dem erfindungsgemäßen Verfahren nicht um eine Emulsionspolymerisation handelt.

Als organische Lösungsmittel geeignet sind beispielsweise Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on, Methylethylketon oder Mischungen der vorgenannten. Bevorzugt sind polare Lösungsmittel, welche einen Hildebrand'schen Lösungsparameter δ (δ = ((ΔHᵥ-RT)/Vₘ)^{½} [(MPa)^{½}]) (Vₘ = molares Volumen; ΔHᵥ = Verdampfungsenthalpie; R = ideale Gaskonstante)) in einem Bereich zwischen 15,5 und 26 (MPa) ^{½}besitzen.

Ausschlaggebend für die Eignung eines Lösungsmittels ist, dass der hergestellte Nitrilkautschuk bei der Reaktionstemperatur, die sich üblicher Weise im unten angegebenen Bereich bewegt, vollständig in Lösung bleibt. Nicht eingesetzt werden Lösungsmittel, die als Transferreagenzien und damit Molekulargewichtsregler in die Reaktion eingreifen, z.B. Tetrachlorkohlenstoff, Thiole und weitere dem Fachmann als solche bekannte Solventien dieser Art.

Ebenfalls möglich ist es, ein Gemisch von zwei oder mehr organischen Lösungsmitteln einzusetzen.

Möglich ist es auch, Lösungsmittel einzusetzen, die den og. Anforderungen genügen und einen Siedepunkt besitzen, der unterhalb desjenigen von Acrylnitril liegt, wie z.B. Methyl-tert.butylether (MTBE).

### TEMPERATUR:

Das erfindungsgemäße Verfahren wird üblicher Weise bei einer Temperatur in einem Bereich von 60°C bis 150°C durchgeführt, bevorzugt in einem Bereich von 70°C bis 130°C, besonders bevorzugt in einem Bereich von 80°C bis 120°C und insbesondere in einem Bereich von 90°C bis 110°C. Wird die Temperatur noch tiefer gewählt, ist die Polymerisation entsprechend verlangsamt. Bei noch deutlich höheren Temperaturen ist es nicht ausgeschlossen, dass der eingesetzte Initiator zu schnell zerfällt und somit kein hohes Molekulargewicht im Polymer erhalten wird.

### UMSETZUNG:

Die Durchführung des erfindungsgemäßen Verfahrens erfolgt üblicherweise so, dass das a,β-ungesättigte Nitril und die optional eingesetzten weiteren copolymerisierbaren Monomere, das Lösungsmittel sowie der Initiator in einem Reaktionsgefäß vorgelegt werden und anschließend das oder die konjugierte Diene zudosiert wird/werden. Die Polymerisation wird im Anschluss durch Temperaturerhöhung gestartet.

Um spezielle Verhältnisse der jeweiligen Monomeren im Co-/Terpolymer zu erhalten, ist es sinnvoll und dem Fachmann durchweg geläufig, entsprechende Modifikationen bezüglich der Dosierung vorzunehmen (z.B. durch Nachdosieren des jeweiligen Monomers, des Initiators oder von Lösungsmittel). Diese Nachdosierung kann für die einzelnen vorgenannten Substanzen kontinuierlich oder aber auch ein- oder mehrfach diskontinuierlich erfolgen.

Zur Einstellung eines geeigneten Molekulargewichts, des Umsatzes und des gewünschten PDIs hat es sich in einer Ausführungsform des erfindungsgemäßen Verfahrens bewährt, den Initiator oder auch Lösungsmittel im Verlauf der Polymerisationsreaktion ein- oder mehrmals nachzudosieren.

### Nitrilkautschuke:

**Gegenstand der Erfindung** sind ferner Nitrilkautschuke, die gegebenenfalls hydriert sind, enthaltend Wiederholungseinheiten abgeleitet von mindestens einem konjugierten Dien, mindestens einem α,β-ungesättigten Nitril und gegebenenfalls einem oder mehreren weiteren copolymerisierbaren Monomeren., dadurch gekennzeichnet, dass diese Nitrilkautschuke keinerlei Strukturelemente in Form von Endgruppen oder strukturellen Einheiten in der Polymerkette aufweisen, die sich von Verbindungen ableiten, die als Molekulargewichtsregler für Polymerisationen fungieren.

Die bereitgestellten optional hydrierten Nitrilkautschuke weisen somit keinerlei Strukturelemente in Form von Endgruppen oder struktureller Einheiten in der Polymerkette auf, die auf die folgenden Molekulargewichtsregler zurückzuführen sind,
(i) Mercaptane, die mindestens eine SH-Gruppe enthalten,
(ii) Mercaptoalkohole, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfide, Polysulfide,
(vi) Thioharnstoff,
(vii) Allylverbindungen,
(viii) Aldehyde,
(ix) aliphatische Halogenkohlenwasserstoffe, araliphatische Halogenkohlenwasserstoffe und
(x) Saccharin.

Insbesondere weisen die optional hydrierten Nitrilkautschuke keinerlei Strukturelemente auf und zwar weder in Form von Endgruppen noch in Form struktureller Einheiten in der Polymerkette, die auf die folgenden Molekulargewichtsregler zurückgehen,
(i) Alkylmercaptane, bevorzugt C₁-C₁₆ Alkylmercaptane, insbesondere Methylmercaptan, Ethylmercaptan, n-Butylmercaptan, n-Hexylmercaptan, n-Octylmercaptan, n-Dodecylmercaptan und tert.-Dodecyl-mercaptane,
(ii) aliphatische Mercapatoalkohole und cycloaliphatische Mercaptoalkohole, bevorzugt 2-Mercapto-1-ethanol, 3-Mercapto-1-propanol, 3-Mercaptopropan-1,2-diol, 4-Mercapto-1-butanol und 2-Mercaptocyclohexanol,
(iii) Mercaptoessigsäure, 3-Mercaptopropionsäure, Mercaptobutandisäure, Cystein, N-Acetylcystein und Alkylthioglycolate, insbesondere Ethylhexylthioglycolat,
(iv) Thioessigsäure,
(v) Xanthogendisulfide, bevorzugt Diisopropylxanthogendisulfid,
(vi) Thioharnstoff
(vii) Allylalkohol, Allylchlorid,
(viii) Crotonaldehyd,
(ix) Chloroform, Tetrachlorkohlenstoff, Iodoform, Benzylbromid und
(x) Saccharin.

Insbesondere weisen die optional hydrierten Nitrilkautschuke auch keinerlei Strukturelemente auf und zwar weder in Form von Endgruppen noch in Form struktureller Einheiten in der Polymerkette, die auf ein Gemisch von Molekulargewichtsreglern aus 2,2,4,6,6-Pentamethylheptanthiol-4, 2,4,4,6,6-Pentamethylheptanthiol-2, 2,3,4,6,6-Pentamethylheptanthiol-2 und 2,3,4,6,6-Pentamethylheptanthiol-3 zurückzuführen sind.

Weiterhin weisen die erfindungsgemäßen Nitrilkautschuke, die gegebenenfalls hydriert sind,
(xi) keine Strukturelemente der allgemeinen Formeln (I), (II), (III), (IV) oder (V) auf, 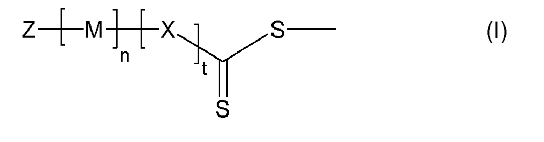 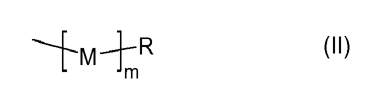 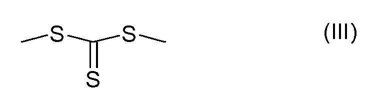 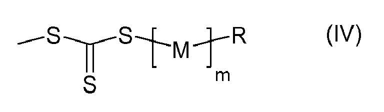 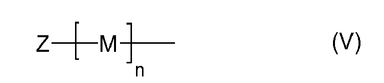 worin
   - **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
   - **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
   - **n und m**: gleich oder verschieden sind und jeweils im Bereich von 0 bis 10.000 liegen,
   - **t**: 0 oder 1 ist, sofern n= 0, und gleich 1 ist, sofern n ≠ 0,
   - **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt und
   - **R**: (**a**) für den Fall, dass m ≠ 0 ist, die gleichen Bedeutungen besitzen kann wie der Rest Z und (**b**) für den Fall, dass m = 0 ist, für H, einen linearen oder verzweigten, gesättigten, ein-oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,

Insbesondere weisen die erfindungsgemäßen Nitrilkautschuke, die gegebenenfalls hydriert sind, keine Strukturelemente der allgemeinen Formel (VIb-1) und gleichzeitig der allgemeinen Formel (VIb-2) auf, 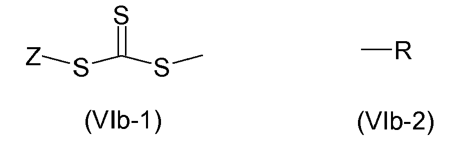 worin
- Z: die zuvor für die allgemeine Formel (I) genannten Bedeutungen besitzt und
- R: die zuvor für die allgemeine Formel (I) genannten Bedeutungen besitzt, allerdings mit der Einschränkung, dass R nach homolytischer Spaltung der Bindung zum nächsten gebundenen Atom im Nitrilkautschuk entweder ein sekundäres, tertiäres oder aromatisch stabilisiertes Radikal ausbildet.

Insbesondere weisen die erfindungsgemäßen Nitrilkautschuke, die gegebenenfalls hydriert sind, auch keine Strukturelemente der Formel (III) und gleichzeitig der allgemeinen Formeln (II') und/oder (I') auf, 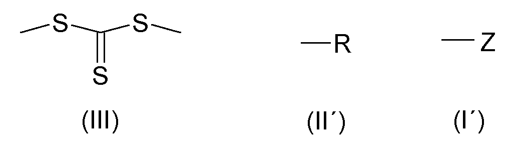 worin
- Z: die gleichen Bedeutungen aufweisen kann wie in der allgemeinen Formel (I) und
- R: die gleichen Bedeutungen aufweisen kann wie in der allgemeinen Formel (II) für m=0, und
- R und Z: gleich oder verschieden sind, allerdings jeweils mit der Maßgabe, dass R und Z nach homolytischer Spaltung ihrer Bindung zum jeweils nächsten Atom im optional hydrierten Nitrilkautschuk jeweils ein sekundäres, tertiäres oder aromatisch stabilisiertes Radikal ausbilden.

Weiterhin weisen die erfindungsgemäßen Nitrilkautschuke keine Strukturelemente der allgemeinen Formel (VIc-1) und gleichzeitig der Formel (VIc-2) auf, 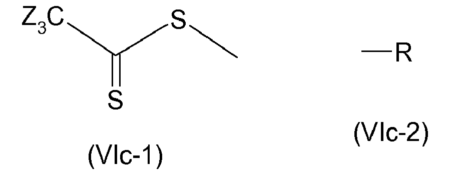 worin
- Z: die zuvor für die allgemeine Formel (I) genannten Bedeutungen besitzt,
- R: die zuvor für die allgemeine Formel (II) genannten Bedeutungen besitzt, allerdings mit der Einschränkung, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.

Das konjugierte Dien im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk ist ein Copolymer aus Acrylnitril und 1,3-Butadien.

Als weitere copolymerisierbare Termonomere können beispielsweise aromatische Vinyl-monomere, bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpenta-fluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene,** wie 4-Cyanocyclohexen und 4-Vinylcyclohexen, oder auch **Alkine**, wie 1- oder 2-Butin.

Alternativ können als weitere copolymerisierbare Termonomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder um deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren**, bevorzugt deren Alkylester und Alkoxyalkylester. Bevorzugt sind die Alkylester, insbesondere C₁-C₁₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexylmethacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxymethyl(meth)acrylat. Einsetz-bar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkyl-methacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate und Hydroxyalkylmethacrylate, in denen die C-Atom-Zahl der Hydroxy-alkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppen-haltige Acrylate oder Methacrylate, vorzugsweise Fluorobenzylacrylate, und Fluorobenzylmeth-acrylat. Einsetzbar sind auch Fluoroalkylgruppen haltige Acrylate und -Methacrylate, vorzugsweise Trifluoroethyl-acrylat und Tetrafluoropropylmethacrylat. Einsetzbar sind auch Aminogruppenhaltige αβ-ungesättigte Carbonsäureester wie Dimethylaminomethyl-acrylat und Diethylaminoethylacrylat.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich beispielsweise handeln um **Alkyl**-, bevorzugt C₁-C₁₀―Alkyl, insbesondere Ethyl-, n-Propyl-, iso-Propyl, n-Butyl-, tert.-Butyl, n-Pentyl- oder n-Hexyl-, **Alkoxyalkyl**-, bevorzugt C₂-C₁₂ Alkoxyalkyl-, besonders bevorzugt C₃-C₈- Alkoxyalkyl, **Hydroxyalkyl**, bevorzugt C₁₂-C₁₂ Hydroxyalkyl-, besonders bevorzugt C₂-C₈-Hydroxyalkyl, **Cycloalkyl**-, bevorzugt C₅-C₁₂-Cycloalkyl-, besonders bevorzugt C₆-C₁₂-Cycloalkyl, **Alkylcycloalkyl**-, bevorzugt C₆-C₁₂―Alkylcycloalkyl-, besonders bevorzugt C₇-C₁₀―Alkylcycloalkyl, **Aryl**-, bevorzugt C₆-C₁₄-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat, 2-Propylheptylacrylat und Lauryl(meth)acrylat. Insbesondere wird n-Butylacrylat eingesetzt. Besonders bevorzugte **Alkoxyalkylester der α,β-ungesättigten Monocarbonsäuren** sind Methoxyethyl(meth)acrylat, Ethoxyethyl(meth)acrylat und Methoxymethyl(meth)acrylat. Insbesondere wird Methoxyethylacrylat eingesetzt.

Besonders bevorzugte **Hydroxyalkylester der α,β-ungesättigten Monocarbonsäuren** sind Hydroxyethyl(meth)acrylat, Hydroxypropyl-(meth)acrylat und Hydroxybutyl(meth)acrylat.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat , N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen
● Maleinsäuremonoalkylester, bevorzugt Monomethylmaleat, Monoethylmaleat, Monopropyl maleat und Mono-n-butylmaleat;
● Maleinsäuremonocycloalkylester, bevorzugt Monocyclopentylmaleat, Monocyclohexyl maleat und Monocycloheptylmaleat;
● Maleinsäuremonoalkylcycloalkylester, bevorzugt Monomethylcyclopentylmaleat und Monoethylcyclohexylmaleat;
● Maleinsäuremonoarylester, bevorzugt Monophenylmaleat;
● Maleinsäuremonobenzylester, bevorzugt Monobenzylmaleat;
● Fumarsäuremonoalkylester, bevorzugt Monomethylfumarat, Monoethylfumarat, Monopropyl fumarat und Mono-n-butyl fumarat;
● Fumarsäuremonocycloalkylester, bevorzugt Monocyclopentylfumarat, Monocyclohexyl fumarat und Monocycloheptylfumarat;
● Fumarsäuremonoalkylcycloalkylester, bevorzugt Monomethylcyclopentylfumarat und Monoethylcyclohexylfumarat;
● Fumarsäuremonoarylester, bevorzugt Monophenylfumarat;
● Fumarsäuremonobenzylester, bevorzugt Monobenzylfumarat;
● Citraconsäuremonoalkylester, bevorzugt Monomethylcitraconat, Monoethylcitraconat, Monopropylcitraconat und Mono-n-butyl citraconat;
● Citraconsäuremonocycloalkylester, bevorzugt Monocyclopentylcitraconat, Monocyclohexyl citraconat und Monocycloheptylcitraconat;
● Citraconsäuremonoalkylcycloalkylester, bevorzugt Monomethylcyclopentylcitraconat und Monoethylcyclohexylcitraconat;
● Citraconsäuremonoarylester, bevorzugt Monophenylcitraconat;
● Citraconsäuremonobenzylester, bevorzgut Monobenzylcitraconat;
● Itaconsäuremonoalkylester, bevorzugt Monomethylitaconat, Monoethylitaconat, Monopropyl itaconat und Mono-n-butyl itaconat;
● Itaconsäuremonocycloalkylester, bevorzugt Monocyclopentylitaconat, Monocyclohexyl itaconat und Monocycloheptylitaconat;
● Itaconsäuremonoalkylcycloalkylester, bevorzugt Monomethylcyclopentylitaconat und Monoethylcyclohexylitaconat;
● Itaconsäuremonoarylester, bevorzugt Monophenylitaconat;
● Itaconsäuremonobenzylester, bevorzugt Monobenzylitaconat.
● Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Es ist ferner möglich, als weitere copolymerisierbare Monomere radikalisch polymerisierbare Verbindungen einzusetzen, die pro Molekül zwei oder mehr olefinische Doppelbindungen enthalten. Beispiele solcher zwei oder mehrfach ungesättigter Verbindungen sind zwei- oder mehrfach ungesättigte Acrylate, Methacrylate oder Itaconate von Polyolen wie z.B. 1,6-Hexandioldiacrylat, 1,6-Hexandioldimethacrylat, Ethylenglykoldiacrylat, Ethylenglykol-dimethacrylat (EGDMA), Diethylenglykoldimethacrylat, Triethylenglykoldiacrylat, Butandiol-1,4-diacrylat, Propandiol-1,2-diacrylat, Butandiol-1,3-dimethacrylat, Neopentylglykoldiacrylat, Trimethylolpropandiacrylat, Trimethylolpropandimethacrylat, Trimethylolethandiacrylat, Trimethylolethandimethacrylat, Trimethylolpropantriacrylat, Trimethylolpropantrimethacrylat (TMPTMA), Glycerindi- und - triacrylat, Pentaerythritdi-, -tri- und tetraacrylat oder -methacrylat, Dipentaerythrittetra, -penta- und -hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamidoethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Bei Einsatz derartiger Termonomere gelingt es vorteilhafterweise, die Polymerisation bis zu hohen Umsätzen zu führen und dabei Nitrilkautschuke herzustellen, die ein vergleichsweise höheres mittleres Molekulargewicht Mw (Gewichtsmittel) bzw. Mn (Zahlenmittel) aufweisen, jedoch trotzdem gelfrei sind.

Die Anteile an konjugiertem Dien und α,β-ungesättigtem Nitril in den erhaltenen NBR-Polymeren können in weiten Bereichen schwanken. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Soweit es sich bei den Termonomeren um solche Monomere handelt, die tertiäre Radikale bilden (z.B. Methacrylsäure), hat es sich bewährt, diese in Mengen von 0 bis 10 Gew.% einzusetzen.

Es ist anzumerken, dass die zuvor genannte Begrenzung der zusätzlichen Monomere auf max. 40 Gew.-% nur für die Konstellation gilt, dass die Gesamtmenge an Monomeren dem Polymerisationsansatz zu Beginn bzw. während der Reaktion zudosiert werden (also zur Erzeugung statistischer Terpolymersysteme).

Die Glastemperaturen der erfindungsgemäßen optional hydrierten Nitrilkautschuke liegen im Bereich von -70°C bis +20°C, vorzugsweise im Bereich -60°C bis 10°.

Aufgrund der freien radikalischen Polymerisation im erfindungsgemäßen Verfahren ist es möglich, durch Steuerung der Parameter Umsatz, Initiatormenge und Monomerkonzentration Nitrilkautschuke mit verschieden breiten Molekulargewichtsverteilungen zu erhalten. Hergestellt werden können Nitrilkautschuke mit einem Polydispersitätsindex im Bereich von 1,5 bis 8, bevorzugt in einem Bereich von 1,55 bis 7, besonders bevorzugt in einem Bereich von 1,6 bis 6.

### Hydrierung:

Ein weiterer Gegenstand der vorliegenden Erfindung besteht in der Bereitstellung von hydrierten Nitrilkautschuken, indem sich an den ersten Polymerisationsschritt unmittelbar die Hydrierung anschließt, wobei keine vorhergehende Isolierung des Nitrilkautschuks nötig ist wie bei der bisher im Stand der Technik eingesetzen NBR Emulsionspolymerisation. Die Hydrierung kann sofern ge-wünscht sogar im gleichen Reaktor wie die Polymerisation durchgeführt werden. Dies führt zu einer substantiellen Vereinfachung und damit zu wirtschaftlichen Vorteilen bei der Herstellung des HNBR.

Die Hydrierung kann unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe **z.B.**US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, insbesondere 90-100% verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Das erfindungsgemäße Verfahren erlaubt es, NBR-Typen (und entsprechend bei nachgelagerter zusätzlicher Hydrierung auch HNBR-Typen) mit niedrigem Molekulargewicht und niedriger Mooney Viskosität herzustellen, ohne dass es im Fall des HNBR vor der Hydrierung zwingend einem gezielten Abbau des Molekulargewichts (z.B. durch Mastikation, chemischen Abbau oder Metathese) in einem weiteren Verfahrensschritt bedarf. Sofern gewünscht, kann natürlich ein solcher zusätzlicher Molekulargewichtsabbau erfolgen, insbesondere durch die dem Fachmann beispielsweise aus der WO-A-02/100941 sowie der WO-A-02/100905 bekannte Metathese.

Sowohl die erfindungsgemäßen Nitrilkautschuke als auch die hydrierten Nitrilkautschuke zeichnen sich gegenüber den optional hydrierten Nitrilkautschuken, bei denen der Nitrilkautschuk durch Emulsionspolymerisation erhalten wird, dadurch aus, dass sie einerseits frei von Molekulargewichtsreglern sind, zudem im Polymermolekül keinerlei funktionelle Einheit oder Endgruppe aufweisen, insbesondere keine Schwefelhaltige, und zum anderen vollständig Emulgator-frei sind und auch keine Salze enthalten, wie sie üblicherweise zur Koagulation der Latices nach der Emulsionspolymerisation zwecks Ausfällung des Nitrilkautschukes eingesetzt werden.

**Gegenstand der vorliegenden Erfindung** sind ferner **vulkanisierbare Mischungen** enthaltend den optional hydrierten Nitrilkautschuk, der weder Endgruppen noch sonstige Strukturelemente in der Polymerkette aufweist, die sich von einem Molekulargewichtsregler ableiten, und mindestens einen Vernetzer. In einer bevorzugten Ausführungsform handelt es sich um vulkanisierbare Mischungen, die zusätzlich mindestens einen Füllstoff enthalten.

Optional können derartige vulkanisierbare Mischungen auch noch ein oder mehrere dem Fachmann für Kautschuke geläufige Additive enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert.Butyl peroxynonylvalerat, Dicumylperoxid, 2,5-Dimethyl-2,5-di(t-butylperoxy)hexan, tert-Butylcumylperoxid, 1,3-Bis(t-butylperoxyisopropyl)benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimethylolpropan-trimethacrylat, Zinkacrylat, Zinkdiacrylat, Zinkmethacrylat, Zinkdimethacrylat, 1,2-Polybutadien oder N,N'-m-Phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den optional hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen optional hydrierten Nitrilkautschuk aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyl-dithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithiocarbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclo-hexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste C2 bis C16), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den optional hydrierten Nitrilkautschuk eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen optional hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(=0)NHNH₂")

Beispiele für derartige Polyamin-Vernetzer (ii) sind:
● Aliphatische Polyamine, bevorzugt Hexamethylendiamin, Hexamethylendiamin carbamat, Tetramethylenpentamin, Hexamethylendiaminzimtaldehyd-Addukt oder Hexamethylendiamindibenzoat;
● Aromatische Polyamine, bevorzugt 2,2-Bis(4-(4-aminophenoxy)phenyl)propan, 4 , 4 '-Methylendianilin, m-Phenylendiamin, p-Phenylendiamin oder 4,4'-Methylen-bis(o-chloroanilin;
● Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzeres in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.Teile des optional hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydeamin-Vernetzungsbeschleuniger wie z.B. n-Butylaldehydanilin. Besonders bevorzugt wird als Vernetzungsbeschleuniger mindestens eine bi- oder polycyclische aminische Base eingesetzt. Diese sind dem Fachmann bekannt. Insbesondere geeignet sind 1,8-diazabicyclo[5.4.0]undec-7-e n ( D B U ) , 1, 5-diazabicyclo[4.3.0]-5-none n ( D B N ) , 1 , 4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des optional hydrierten Nitrilkautschuks.

Sofern es sich bei den erfindungsgemäßen optional hydrierten Nitrilkautschuken um solche handeln, die Wiederholungseinheiten eines oder mehrerer hydroxylgruppenhaltiger Termonomere beinhalten, so kann ein Vernetzung auch über den Einsatz eines Isocyanat-Vernetzers, der mindestens zwei Isocyanatgruppen beinhaltet, erfolgen, bevorzugt in Gegenwart eines Vernetzungsbeschleunigers.

Als Vernetzer für den optional hydrierten Nitrilkautschuk wird somit ein dimeres, trimeres, oligomeres oder polymeres Di- oder Polyisocyanat eingesetzt. Die Formulierung "Di- oder Polyisocyanat" steht dabei dafür, dass der Vernetzer zwei oder mehr freie oder gegebenenfalls blockierte Isocyanatgruppen im Molekül aufweist, "Dimer, trimer, oligomer oder polymer" steht dabei dafür, dass der Vernetzer aus einer entsprechenden Anzahl von zwei, drei oder mehr monomeren Mono-, Di- oder Polyisocyanaten aufgebaut ist.

Besonders bevorzugt ist die Verwendung von Vernetzern auf Basis von dimeren oder trimeren Diisocyanaten, welche Allophanat-, Biuret-, Uretdion-, Uretonimin-, verbrückte Carbamat-, Carbodiimid-, Oxadiazintrion-, Isocyanurat- oder Iminooxadiazindion-Strukturelemente aufweisen sowie zwei oder mehr freie Isocyanatgruppen im Molekül. Diese können auch als oligomere oder polymere Allophanate, Biurete, Uretdione, Uretonimine, verbrückte Carbamate, Carbodiimide, Isocyanurate, Oxadiazintrione oder Iminooxadiazindione vorliegen, d. h. dass die einzelnen Ringe sind dann zu einem Oligomer oder Polymer verbunden sind. Eine entsprechende Oligomer- oder Polymerbildung tritt insbesondere dann auf, wenn als monomere Isocyanate di- oder polyfunktionelle Isocyanate verwendet werden.

Grundsätzlich ist es möglich, dass der Vernetzer auf einem einzigen Typ eines monomeren, oligomeren oder polymeren Di- oder Polyisocyanats basiert. Es ist aber auch möglich, dass die genannten Strukturelemente durch eine Reaktion verschiedener monomerer, oligomerer oder polymerer Di- oder Polyisocyanate zustande kommen.

Geeignete Beispiele für cyclische Vernetzer auf Basis von monomeren Diisocyanaten, die einen aliphatischen oder cycloaliphatischen Rest aufweisen, sind dem Fachmann an sich bekannt und umfassen z.B. Isophorondiisocyanat, 1,4-Cyclohexyldiisocyanat, 1,1-Methylen-bis-(4-iso-cyanato cyclohexan), 1,2-Bis-(4-isocyanatononyl)-3-heptyl-4-pentylcyclohexan und Hexamethylen-1,6-diisocyanat.

Die vulkanisierbare Mischung basierend auf dem erfindungsgemäßen optional hydrierten Nitrilkautschuk kann prinzipiell auch Anvulkanisationsverzögerer enthalten. Hierzu gehören Cyclohexylthiophthalimid ( C T P ) , N,N'-Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße optional hydrierten Nitrilkautschuk auch mit weiteren üblichen Kautschukadditiven gemischt werden.

Als **Füllstoffe** können z.B. Ruß, Kieselsäure, Bariumsulfat, Titandioxid, Zinkoxid, Calciumoxid, Calciumcarbonat, Magnesiumoxid, Aluminiumoxid, Eisenoxid, Aluminium-hydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des optional hydrierten Nitrilkautschuks.

Als **Alterungsschutzmittel** können den vulkanisierbaren Mischungen aus der Literatur bekannte Alterungsschutzmittel zugesetzt werden. Sie werden üblicher Weise in Mengen im Bereich von ca. 0 bis 10 phr, bevorzugt 0,25 bis 7,5 phr, besonders bevorzugt 0,5 bis 5 phr bezogen auf 100 phr des optional hydrierten Nitrilkautschuks eingesetzt.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-*p*-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Nitrilkautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind *N-*Isopropyl-*N*'-phenyl-*p*- Phenylendiamin, *N*-1,3-Dimethylbutyl-*N*'-Phenyl-*p*-Phenylendiamin (6PPD), *N*-1,4-Dimethylpentyl-*N*'-phenyl-*p*-Phenylendiamin (7PPD), *N*,*N*'-bis-1,4-(1,4-Dimethylpentyl)-*p-*Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem dann verwendet, wenn peroxidisch vulkanisiert wird.

Als **Formtrennmittel** kommen beispielsweise in Betracht: Gesättigte und teilweise ungesättigte Fettund Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des optional hydrierten Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der vorliegenden Erfindung** ist ferner ein **Verfahren zur Herstellung von Vulkanisaten**, dadurch gekennzeichnet, dass die zuvor genannte vulkanisierbare Mischung einer Vernetzung unterzogen wird. Die Vernetzung wird typischerweise entweder durch mindestens einen Vernetzer oder aber durch photochemische Aktivierung herbeigeführt.

Im Fall der **photochemisch aktivierten Vulkanisation** können als UV-Aktivatoren die dem Fachmann üblicherweise bekannten eingesetzt werden, beispielsweise Benzophenon, 2-Methylbenzophenon, 3,4-Dimethylbenzophenon, 3-Methylbenzophenon, 4,4'-Bis(diethyl-amino)benzophenon, 4,4'-Di-hydroxybenzophenon, 4,4'-Bis[2-(1-propenyl)phenoxy]benzophenon, 4-(Diethylamino)benzophenon, 4-(Dimethylamino)benzophenon, 4-Benzoylbiphenyl, 4-Hydroxybenzophenon, 4-Methylbenzophenon, Benzophenon-3,3',4,4'-tetracarboxyldianhydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-*tert*-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

Üblicherweise erfolgt die Vulkanisation im Rahmen eines formgebenden Verfahrens, bevorzugt unter Anwendung eines Spritzgussverfahrens.

**Gegenstand der Erfindung** ist somit ebenso das spezielle Formteil, welches erhältlich ist durch das vorgenannte Vulkanisationsverfahren. Es ist möglich, eine Vielzahl von Formteilen herzustellen, wie z.B. Dichtungen, Kappen, Schläuche oder Membranen. Herstellbar sind z.B. O-Ringdichtungen, Flachdichtungen, Wellendichtringe, Dichtmanschetten, Dichtkappen, Staubschutzkappen, Steckerdichtungen, Thermoisolierschläuche (mit und ohne PVC-Zusatz), Ölkühlerschläuche, Luftansaugschläuche, Servolenkschläuche oder Pumpenmembranen.

### BEISPIELE

### Molekulargewichte sowie Polydispersitätsindex:

Die Bestimmung der Molekulargewichte in Form des Zahlenmittels des Molekulargewichts (Mₙ) und des Gewichtsmittels des Molekulargewichts (M_{w}) sowie des Polydispersitätsindex erfolgte mittels Gelpermeations-Chromatographie (GPC) nach DIN 55672-1 (Teil 1: Tetrahydrofuran THF als Lösungsmittel).

Die nachfolgend teilweise verwendeten Abkürzungen haben die folgenden Bedeutungen:
- DMAc: Dimethylacetamid
- VAm^{®} 110: 1,1'-Azobis(N-butyl-2-methylpropionamid) (Wako Pure Chemical Industires Ltd)
- V30^{®}: 1-[(1-Cyano-1-methylethyl)azo]formamid (Wako Pure Chemical Industires Ltd)

### Beispiele 1 -7

### Herstellung von Nitrilkautschuken ("NBR") in Dimethylacetamid bei unterschiedlichen Konzentrationen an Initiator

### In Beispiel 1 wurde wie Folgt polymerisiert:

Die entsprechende in Tabelle 1 vorgegebene Menge des Initiators Vam 110 bzw. V30 wurde in 95 ml (129 phm) DMAc gelöst, 34 ml Acrylnitril (519 mmol entsprechend 38 phm) zugesetzt und für 10 Minuten mit Argon entgast. Die Monomer-/Initiatorlösung wurde in den Reaktor überführt, dieser verschlossen und durch dreimaliges Evakuieren/Spülen mit Argon sauerstofffrei gemacht. 71 ml 1,3-Butadien (847 mmol entsprechend 62 phm) wurden über eine Druckbürette unter einem Druck von 3 bar zudosiert und die Reaktion durch Erhitzen auf 100 °C gestartet. Das Erreichen dieser Temperatur stellt den Polymerisationsbeginn dar. Der Polymerisationsverlauf wurde durch gravimetrische Umsatzbestimmungen mittels zwischenzeitlicher Probenentnahme verfolgt. Nach einer Polymerisationszeit von 9 Stunden wurde die Heizquelle entfernt, überschüssiges 1,3-Butadien nach Abkühlen des Reaktors durch Belüften entfernt und das Polymer durch Fällung in Ethanol, welches die in Tabelle 1 angegebenen Menge an Brenzkatechin/Hydrochinon als Stabilisator enthielt. ethanolischer Stabilisatorlösung erhalten. Das Polymer wurde anschließend im Hochvakuum getrocknet.

Die Polymerisationen der Beispiele 2 bis 7 wurden analog durchgeführt unter Variation der Menge des Initiators und der Reaktionszeit (siehe Tabelle 1). Soweit die Polymerisationsbedingungen von denen in Beispiel 1 abwichen, ist dies ebenfalls in Tabelle 1 aufgeführt.

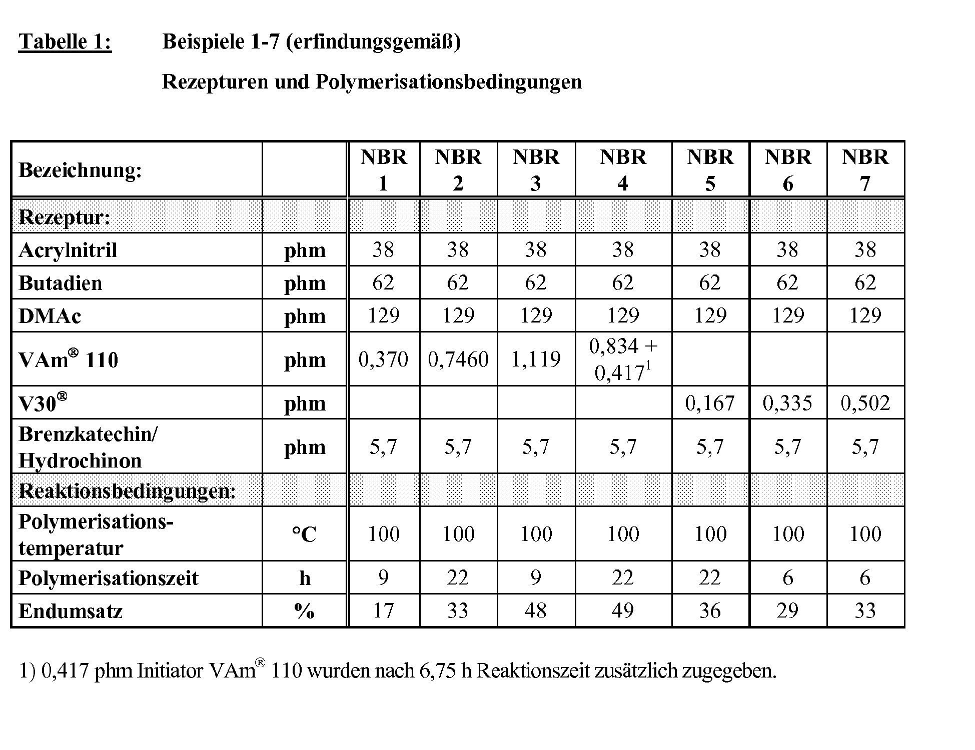

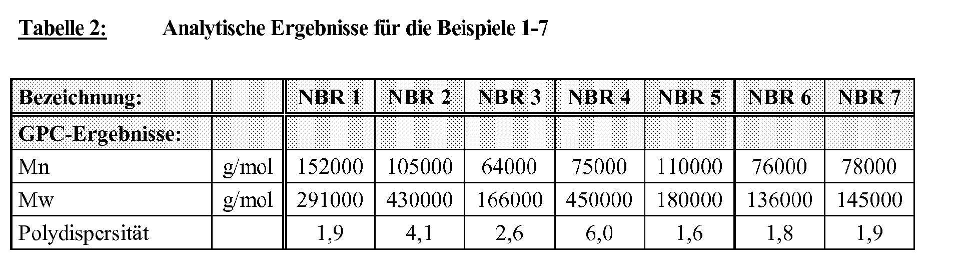

## Patentansprüche

1. Verfahren zur Herstellung von Nitrilkautschuken durch radikalische Polymerisation mindestens eines konjugierten Diens, mindestens eines α,β-ungesättigten Nitrils und gegebenenfalls eines oder mehrerer weiterer copolymerisierbarer Monomere unter Einsatz eines Initiators in mindestens einem organischen Lösungsmittel, **dadurch gekennzeichnet, dass** die Polymerisation in Abwesenheit von Substanzen erfolgt, die während der Polymerisation als Molekulargewichtsregler fungieren.

2. Verfahren nach Anspruch 1, wobei sich an die radikalische Polymerisation eine Hydrierung anschließt.

3. Verfahren nach Anspruch 1, wobei die Polymerisation in Abwesenheit von Molekulargewichtsreglern der nachfolgenden Aufzählung (i) - (xi) erfolgt
(i) Mercaptanen, die mindestens eine SH-Gruppe enthalten,
(ii) Mercaptoalkohole, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfide, Polysulfide,
(vi) Thioharnstoff,
(vii) Allylverbindungen,
(viii) Aldehyde,
(ix) aliphatische Halogenkohlenwasserstoffen, araliphatische Halogenkohlen-wasserstoffen und
(x) Saccharin
(xi) Verbindungen der allgemeinen Strukturformel (VI), 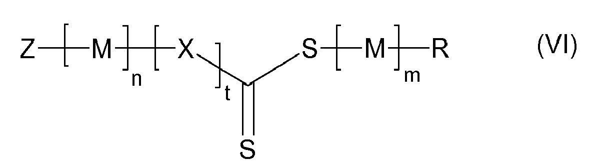 worin
**Z** für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
**R** (**a**) für den Fall, dass m ≠ 0 ist, die gleichen Bedeutungen besitzen kann wie der Rest Z und (**b**) für den Fall, dass m = 0 ist, für H, einen linearen oder verzweigten, gesättigten, ein- oder mehrfach ungesättigten Alkylrest, einen gesättigten, ein-oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
**M** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und m** gleich oder verschieden sind und jeweils im Bereich von 0 bis 10.000 liegen,
**t** 0 oder 1 ist, sofern n= 0, und gleich 1 ist, sofern n ≠ 0, und
**X** für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt.

4. Verfahren nach Anspruch 3, wobei die Polymerisation in Abwesenheit von Molekulargewichtsreglern der nachfolgenden Aufzählung (i) - (x) erfolgt,
(i) Alkylmercaptanen, bevorzugt C₁-C₁₆ Alkylmercaptanen, insbesondere Methylmercaptan, Ethylmercaptan, n-Butylmercaptan, n-Hexylmercaptan, n-Octylmercaptan, n-Dodecylmercaptan und tert.-Dodecyl-mercaptanen,
(ii) aliphatischen Mercapatoalkoholen und cycloaliphatischen Mercaptoalkoholen, bevorzugt 2-Mercapto-1-ethanol, 3-Mercapto-1-propanol, 3-Mercaptopropan-1,2-diol, 4-Mercapto-1-butanol und 2-Mercaptocyclohexanol,
(iii) Mercaptoessigsäure, 3-Mercaptopropionsäure, Mercaptobutandisäure, Cystein, N-Acetylcystein und Alkylthioglycolate, insbesondere Ethylhexylthioglycolat,
(iv) Thioessigsäure,
(v) Xanthogendisulfide, bevorzugt Diisopropylxanthogendisulfid,
(vi) Thioharnstoff,
(vii) Allylalkohol, Allylchlorid,
(viii) Crotonaldehyd,
(ix) Chloroform, Tetrachlorkohlenstoff, Iodoform, Benzylbromid und
(x) Saccharin.

5. Verfahren nach Anspruch 3, wobei die Polymerisation in Abwesenheit von Molekulargewichtsreglern (xi)(1)-(xi)(5) der nachfolgenden Aufzählung erfolgt
(xi)(1) Verbindungen der allgemeinen Formel (VIa), 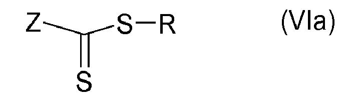 worin Z und R die für die allgemeine Formel (VI) genannten Bedeutungen besitzen,
(xi)(2) Verbindungen der allgemeinen Formel (VIb), 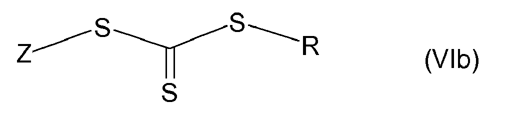 worin
Z die zuvor für die allgemeine Formel (VI) genannten Bedeutungen besitzt,
R die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbilden müsste,
(xi)(3) Verbindungen der allgemeinen Formel (VIc), 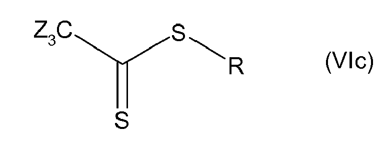 worin
Z die für die allgemeine Formel (VI) genannten Bedeutungen besitzt,
R die für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbilden müsste,
(xi)(4) Verbindungen der allgemeinen Formel (VId), 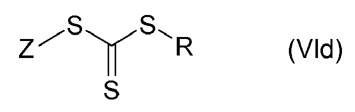 worin
Z die für die allgemeine Formel (VI) genannten Bedeutungen besitzt, allerdings mit der Einschränkung, dass Z nach homolytischer Spaltung der S-Z Bindung ein primäres Radikal ausbildet, und
R die gleichen Bedeutungen wie Z in der allgemeine Formel (VI) besitzt, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen, und
(xi)(5) Verbindungen der allgemeinen Formel (VIe), 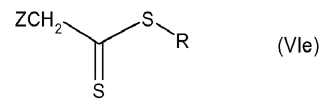 worin
Z die für die allgemeine Formel (VI) genannten Bedeutungen besitzt und
R die gleichen Bedeutungen wie Z in der allgemeine Formel (VI) besitzt, allerdings mit der Einschränkung, dass R nach homolytischer Spaltung der S-R Bindung entweder ein sekundäres, tertiäres oder aromatisch stabilisiertes Radikal ausbilden müsste.

6. Verfahren nach Anspruch 5, wobei die Polymerisation in Abwesenheit von Dodecylpropansäuretrithiocarbonat, Dibenzoyltrithiocarbonat, Cumyl-phenyldithioacetat, Cumyldithiobenzoat, Phenylethyldithiobenzoat, Cyanoiso-propyldithiobenzoat, 2-Cyanoethyldithiobenzoat, 2-Cyanoprop-2-yl-dithiophenylacetat, 2-Cyanoprop-2-yl-dithiobenzoat, S-Thiobenzoyl-1H,1H,2-Keto-3-oxa-4H,4H,5H,5H-per-fluoroundecanthiol und S-Thiobenzoyl-1-phenyl-2-keto-3-oxa-4H,4H,5H,5H-perfluoroundecanthiol erfolgt.

7. Verfahren nach Anspruch 1 oder 2, wobei der Initiator in einer Menge im Bereich von 10⁻⁴ bis 10-¹ mol/l, bevorzugt in einer Menge von 10⁻³ bis 10⁻² mol/l eingesetzt wird.

8. Verfahren nach Anspruch 1 oder 2, wobei die Polymerisation in Gegenwart mindestens eines peroxidischen Initiators oder mindestens ein Azo-Initiators durchgeführt wird, der bei einer Temperatur von 70°C bis 200 °C, bevorzugt 80°C bis 175°C, besonders bevorzugt 85°C bis 160°C und insbesondere 85°C bis 150°C, in dem organischen Lösungsmittel eine Halbwertszeit von 10 Stunden oder mehr als 10 Stunden aufweisen

9. Verfahren nach Anspruch 1 oder 2, wobei die Polymerisation in Gegenwart eines Azoinitators der Strukturformeln (Ini-1) bis (Ini-6) durchgeführt wird.

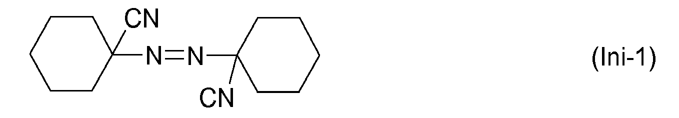

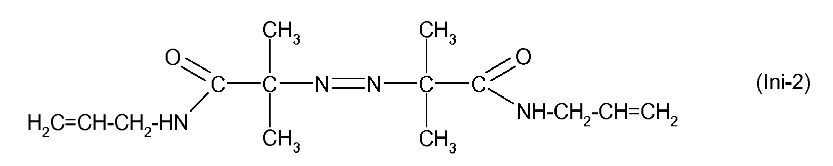

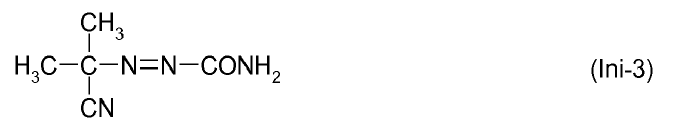

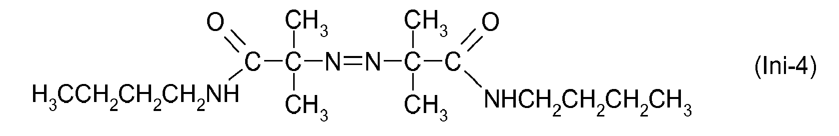

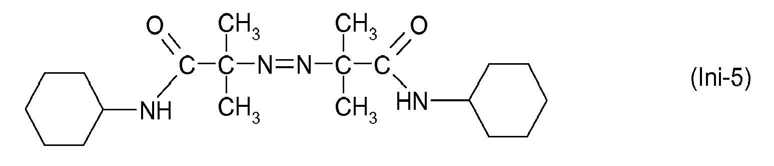

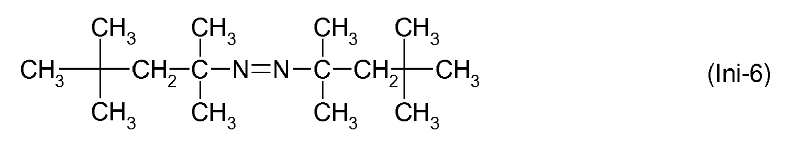

10. Verfahren nach Anspruch 1 oder 2, wobei die Polymerisation unter Einsatz von t-Butylhydroperoxid, Cumolhydroperoxid, Pinanhydroperoxid, p-Menthanhydroperoxid, Dibenzoylperoxid, 2,4-Dichlorbenzoylperoxid, 2,5-Dimethylhexan-2,5-di-t.butylperoxid, Bis-(t-butylperoxyisopropyl) benzol, t-Butylcumylperoxid, Di-t-butylperoxid, Dicumylperoxid, t-Butylperbenzoat, t-Butylperacetat, 2,5-Dimethylhexan-2,5-diperbenzoat oder t-Butyl-per-3,5,5-trimethylhexanoat durchgeführt wird.

11. Verfahren nach Anspruch 1 oder 2, wobei als organisches Lösungsmittel Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on, Methylethylketon oder Methyl-tert.butylether eingesetzt wird.

12. Nitrilkautschuk enthaltend Wiederholungseinheiten abgeleitet von mindestens einem konjugierten Dien, mindestens einem α,β-ungesättigten Nitril und gegebenenfalls einem oder mehreren weiteren copolymerisierbaren Monomeren, **dadurch gekennzeichnet, dass** der Nitrilkautschuk keinerlei Strukturelemente in Form von Endgruppen oder strukturellen Einheiten in der Polymerkette aufweist, die sich von Verbindungen ableiten, die im Rahmen der Polymerisation der Nitrilkautschuk-Monomere als Molekulargewichtsregler fungieren.

13. Nitrilkautschuk nach Anspruch 12, **dadurch gekennzeichnet, dass** er keine Strukturelemente in Form von Endgruppen oder struktureller Einheiten in der Polymerkette aufweist, die auf die folgenden Molekulargewichtsregler zurückzuführen sind,
(i) Mercaptane, die mindestens eine SH-Gruppe enthalten,
(ii) Mercaptoalkohole, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfide, Polysulfide,
(vi) Thioharnstoff,
(vii) Allylverbindungen,
(viii) Aldehyde
(ix) aliphatische Halogenkohlenwasserstoffen, araliphatische Halogenkohlenwasser-stoffen,
(x) Saccharin und
dass er ferner keine Strukturelemente (xi) der allgemeinen Formeln (I), (II), (III), (IV) und (V) aufweist, 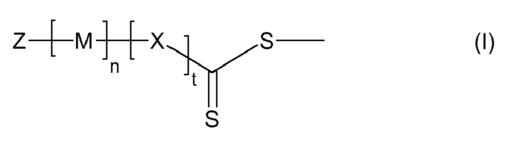 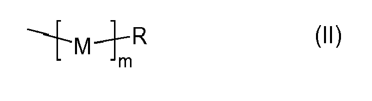 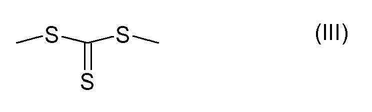 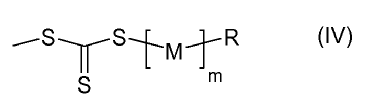 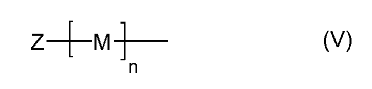 worin
**Z** für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
**M** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und m** gleich oder verschieden sind und jeweils im Bereich von 0 bis 10.000 liegen,
**t** 0 oder 1 ist, sofern n= 0, und gleich 1 ist, sofern n ≠ 0,
**X** für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt und
**R** (a) für den Fall, dass m ≠ 0 ist, die gleichen Bedeutungen besitzen kann wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach unge-sättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,

14. Nitrilkautschuk nach Anspruch 12 oder 13, der einen Polydispersitätsindex im Bereich von 1,5 bis 8, bevorzugt 1,55 bis 7 und besonders bevorzugt 1,6 bis 6 besitzt.

15. Vulkanisierbare Mischungen enthaltend den Nitrilkautschuk nach einem der Ansprüche 12 bis 14, mindestens einen Vernetzer, optional mindestens einen Füllstoff und optional ein oder mehrere weitere Kautschukadditive.

16. Verfahren zur Herstellung von Vulkanisaten, **dadurch gekennzeichnet, dass** die vulkanisierbare Mischung nach Anspruch 15 einer Vernetzung unterzogen wird, bevorzugt durch Zusatz mindestens eines Vernetzers oder durch photochemische Aktivierung.

17. Vulkanisate, bevorzugt Formteile, erhältlich durch das Verfahren nach Anspruch 16.
